# EUROPÄISCHE PATENTSCHRIFT

(11) **EP 3 132 688 B1**
(45) Veröffentlichungstag und Bekanntmachung des Hinweises auf die Patenterteilung: **27.12.2017**
(21) Anmeldenummer: 16184501.1
(22) Anmeldetag: 17.08.2016
(51) Int. Cl.: A23L 5/43

(54) **BASISKOMPONENTE UND GLANZKOMPONENTE FÜR EIN WÄSSRIGES EIERFÄRBEMITTEL**
BASE COMPONENT AND GLOSS COMPONENT FOR AQUEOUS EGG DYEING COMPOSITION
COMPOSANT DE BASE ET COMPOSANT DE BRILLANCE POUR UN COLORANT A BASE AQUEUSE POUR OEUFS

(30) Priorität: 18.08.2015 DE 102015010608
(43) Veröffentlichungstag der Anmeldung: 22.02.2017
(73) Patentinhaber: Brauns-Heitmann GmbH & Co. KG, 34414 Warburg (DE)
(72) Erfinder: Gibbels, Dr. Uwe, 34414 Warburg (DE); Füser, Katja, 59602 Rüthen (DE); Wieczorek, Maria, 34434 Borgenstreich (DE)
(74) Vertreter: Geskes, Christoph

(56) Entgegenhaltungen:
- EP-A1- 0 956 851
- DE-A1-102012 221 267
- US-A- 4 479 971
- US-A1- 2013 210 916
- DATABASE WPI Week 201433 Thomson Scientific, London, GB; AN 2014-J36996 XP002766260, -& CN 103 666 368 A (LUAN X) 26. März 2014 (2014-03-26)
- MIRHOSSEINI ET AL: "Effect of Arabic gum, xanthan gum and orange oil on flavor release from diluted orange beverage emulsion", FOOD CHEMISTRY, ELSEVIER LTD, NL, Bd. 107, Nr. 3, 27. November 2007 (2007-11-27), Seiten 1161-1172, XP022364836, ISSN: 0308-8146
- DATABASE WPI Week 199923 Thomson Scientific, London, GB; AN 1999-267333 XP002766261, -& JP H11 80588 A (NOEVIR KK) 26. März 1999 (1999-03-26)
- Anonymous: "Muschelglanz: kostbar schimmernd, leicht gemacht", Produktbeschreibung, 17. Juni 2015 (2015-06-17), XP055338130, Gefunden im Internet: URL:http://web.archive.org/web/20150617041 507/http://www.heitmann-eierfarben.de/.cms /118-1-249 [gefunden am 2017-01-24]

## Beschreibung

Die vorliegende Erfindung betrifft eine Basiskomponente für ein wässriges Eierfärbemittel und ein Eierfärbemittelsystem umfassend die Basiskomponente und eine Glanzkomponente.

Weiterhin betrifft die vorliegende Erfindung die Verwendung der Basiskomponente als Eierfärbemittelgrundierung.

Zudem betrifft die vorliegende Erfindung ein Herstellungsverfahren für die Basiskomponente.

Eine Vielzahl von Techniken und Verfahren zum Färben von Eiern, sowohl gekochten als auch ausgelassenen, sind bekannt. Beispielsweise werden Eier zum Färben in ein Farbbad gegeben. Zum Auftrag von Motiven und Mustern werden insbesondere wasserlösliche Farben mittels Pinsel oder Stempel direkt auf die Schale aufgetragen. Aufgrund der porösen Struktur der Schale setzen sich die Pigmente sehr schnell fest. Ein aquarellartiges Mischen der Farben ist kaum möglich. Es entstehen dunkle Schlieren. Beim Mischen der Farben bzw. bei einem sukzessiven Auftrag verschiedener Farben können zudem Unebenheiten in der Farboberfläche auftreten. Die dunklen Schlieren und die Unebenheiten können insbesondere bei den bei Kunden immer beliebter werdenden irisierenden Farben, insbesondere solchen mit Perlmuttglanz, sowie bei einer Versiegelung des Designs der Eierschale mit transparentem und/oder farbigem Lack besonders auffällig werden. Zudem müssen Farbzusammensetzungen mit irisierenden Farben, die in aller Regel wasserunlösliche Pigmente auf Silikatbasis darstellen, jedoch auch metallische Pigmente sein können, auf Grund ihrer Neigung zur Sedimentierung in Flüssigkeiten mit Verdickungsmitteln versetzt werden, oder sie müssen in eine schmelzbare Farbzusammensetzung gegeben werden. Dies schränkt die Varianten in einer möglichen Zusammensetzung einer Eierfärbemittelzusammensetzung ein.

Es ist daher die Aufgabe der vorliegenden Erfindung, die vorgenannten Nachteile aus dem Stand der Technik weitestgehend zu überwinden und insbesondere ein neuartiges Eierfärbemittelsystem bereitzustellen, welches einen lasur- bzw. aquarellartigen Farbauftrag ermöglicht, wobei gleichzeitig eine besonders glatte Farboberfläche mit Perlmuttglanz realisierbar ist. Unter Perlmuttglanz wird ein seidiger, irisierender Glanz verstanden, der in natürlicher Form bei Perlen auftritt.

Diese Aufgabe wird gelöst durch eine Basiskomponente für ein wässriges Eierfärbemittel gemäß Anspruch 1 und ein Eierfärbemittelsystem umfassend die Basiskomponente und die Glanzkomponente gemäß Anspruch 7.

Die Aufgabe wird ferner gelöst durch eine Verwendung der Basiskomponente gemäß einem der Ansprüche 1 bis 6 als Eierfärbemittelgrundierung oder als Eierfärbemittel. Weiterhin wird die Aufgabe gelöst durch ein Herstellungsverfahren für die Basiskomponente gemäß Anspruch 11. Die erfindungsgemäße Basiskomponente für ein wässriges Eierfärbemittel umfasst Wasser, mindestens eine anorganische oder organische Säure, mindestens ein Konservierungsmittel, sowie mindestens ein Bindemittel. Erfindungsgemäß ist das Bindemittel Gummi Arabicum, welches kein Verdickungsmittel ist und zumindest teilweise nicht verträglich ist mit Verdickungsmitteln, in einer Menge in einem Bereich von etwa 21 Gew.-% bis etwa 45 Gew.-%, besonders bevorzugt von etwa 23 Gew.-% bis etwa 33 Gew.-%, weiter bevorzugt in einer Menge in einem Bereich von etwa 24 Gew.-% bis etwa 43 Gew.-%, noch weiter bevorzugt in einer Menge in einem Bereich von etwa 31 Gew.-% bis etwa 41 Gew.-%, bezogen auf die Gesamtmenge der Basiskomponente, von dieser umfasst. Bevorzugt ist die erfindungsgemäße Basiskomponente verdickungsmittelfrei.

Anders als bekannte Bindemittel geliert Gummi Arabicum nicht, sondern erhärtet erst durch Austrocknen. Durch die erfindungsgemäße Menge von Gummi Arabicum wirkt dieses auch als Verlaufsmittel. Während des Austrocknens ermöglicht die Basiskomponente als feuchte Grundierung einen lasurartigen, aquarellartigen Farbauftrag, wobei die resultierende Farboberfläche glatt und schlierenfrei ist, da die aufgetragenen Farb- und/oder Glanzpigmente gleichmäßig verlaufen können. Auf die Basiskomponente ist während des Aushärtens auch ein Perlmuttglanzstoff bzw. eine Perlmuttglanzstoff aufweisende Glanzkomponente auftragbar, ohne dass eine Sedimentation des Perlmuttglanzstoffs zu befürchten wäre. Bei Mischung der Basiskomponente und der Glanzkomponente kurz vor dem Auftrag auf dem Ei ist ebenfalls keine Sedimentation des Perlmuttglanzstoffs zu befürchten.

Erfindungsgemäß umfasst die Basiskomponente mindestens einen Farbstoff. Vorzugsweise ist der Farbstoff ein Naturfarbstoff auf Basis natürlicher Rohstoffe. Derartige Rohstoffe umfassen insbesondere Blüten- und andere Pflanzenfarbstoffe sowie aus niederen Lebewesen gewonnene Farbstoffe wie echtes Karmin und Riboflavin. Weiterhin umfassen Naturfarbstoffe Extrakte und/oder Konzentrate aus Frucht bzw. Gemüse und deren Säften.

Als Farbstoff können jedoch auch synthetische Farbstoffe verwendet werden. Besonders bevorzugt wird ein als Lebensmittelzusatzstoff zugelassener Farbstoff verwendet. Entsprechend kann als Farbstoff insbesondere E 104, E 110, E 124, E 122, E 127, E 131 und/oder E 142 verwendet werden.

Weiterbildend umfasst die Basiskomponente den mindestens einen Farbstoff in einer Menge in einem Bereich von etwa 0,1 Gew.-% bis etwa 15 Gew.-%, besonders bevorzugt von etwa 7 Gew.-% bis etwa 12 Gew.-%, bezogen auf die Gesamtmenge der Basiskomponente.

Gemäß einer Weiterbildung ist die mindestens eine organische Säure Milchsäure. Milchsäure ist besonders bewährt in der Lebensmittelindustrie und dient vorliegend dazu, einen geeigneten pH-Wert einzustellen, um die Stabilität des Farbstoffs zu gewährleisten.

Hierfür können auch Zitronensäure, Weinsäure, Apfelsäure, Zitronensäure, Gluconsäure, Essigsäure, Ameisensäure, Ascorbinsäure, Salzsäure, Glucono-Delta-Lacton (Gluconsäure-5-Lacton), Fumarsäure, Isoascorbinsäure, Phosphorsäure, Adipinsäure und/oder Metaweinsäure verwendet werden. Weiterbildend ist die mindestens eine anorganische oder organische Säure von der erfindungsgemäßen Basiskomponente in einer Menge in einem Bereich von etwa 0,3 Gew.-% bis etwa 3 Gew.-% umfasst.

Weiter bevorzugt ist die mindestens eine anorganische oder organische Säure von der erfindungsgemäßen Basiskomponente in einer Menge in einem Bereich von etwa 0,35 Gew.-% bis etwa 0,8 Gew.-%, besonders bevorzugt in einem Bereich von etwa 0,4 Gew.-% bis etwa 0,7 Gew.-%, umfasst.

Besonders bevorzugt hat die Basiskomponente einen pH-Wert in einem Bereich von etwa 2,5 bis etwa 5,5, weiter bevorzugt von etwa 2,6 bis etwa 4,6, und noch weiter bevorzugt von etwa 3,5 bis etwa 4,5. In den genannten pH-Wertbereichen sind Farbstoffe, insbesondere die vorstehend genannten Naturfarbstoffe, sehr stabil.

Das mindestens eine Konservierungsmittel der erfindungsgemäßen Basiskomponente ist bevorzugt Kaliumsorbat. Kaliumsorbat ist ein besonders bewährter zugelassener Lebensmittelzusatzstoff.

Das mindestens eine Konservierungsmittel kann auch aus einer Gruppe umfassend Benzoesäure und deren Derivate und/oder Sorbinsäure und deren Derivate ausgewählt sein. Bevorzugt ist das mindestens eine Konservierungsmittel aus einer Gruppe umfassend Natriumbenzoat, Kaliumbenzoat und/oder Kaliumsorbat ausgewählt.

Das mindestens eine Konservierungsmittel ist bevorzugt in einer Menge in einem Bereich von etwa 0,1 Gew.-% bis etwa 1 Gew.-%, bezogen auf die Gesamtmenge der erfindungsgemäßen Basiskomponente, von dieser umfasst.

Weiter bevorzugt ist das mindestens eine Konservierungsmittel in einem Bereich von etwa 0,2 Gew.-% bis etwa 0,3 Gew.-%, bezogen auf die Gesamtmenge der erfindungsgemäßen Basiskomponente, von dieser umfasst.

Vorzugsweise umfasst die erfindungsgemäße Basiskomponente Wasser in einer Menge in einem Bereich von etwa 11 Gew.-% bis etwa 78,6 Gew.-%, weiter bevorzugt in einem Bereich von etwa 65 Gew.-% bis etwa 75 Gew.-%, wobei die Gewichtsprozentangaben bezogen auf die Gesamtmenge der erfindungsgemäßen Basiskomponente sind.

Eine Glanzkomponente für ein wässriges Eierfärbemittel, die mit der Basiskomponente kombiniert werden kann, umfasst Wasser, mindestens ein Verdickungsmittel, mindestens eine anorganische oder organische Säure, mindestens ein Konservierungsmittel sowie mindestens einen Perlmuttglanzstoff. Mittels des Verdickungsmittels kann eine Sedimentation des Perlmuttglanzstoffs in der Glanzkomponente verhindert werden. Mittels der anorganischen oder anorganischen Säure lässt sich ein geeigneter pH-Wert für einen eventuellen Farbstoff einstellen. Besonders bevorzugt hat die Glanzkomponente einen pH-Wert in einem Bereich von etwa 2,5 bis etwa 5,5, weiter bevorzugt von etwa 2,6 bis etwa 4,6, und noch weiter bevorzugt von etwa 3,5 bis etwa 4,5. Die Glanzkomponente kann kurz vor Auftrag mit der vorbeschriebenen Basiskomponente gemischt werden, wobei dann keine Sedimentation noch während des Auftrags zu befürchten ist. Die Glanzkomponente kann jedoch auch auf einer Grundierung aus der Basiskomponente aufgetragen werden, um lasur- oder aquarellartige Effekte zu erzielen.

Weiterbildend umfasst der mindestens eine Perlmuttglanzstoff ein natürliches Silikat sowie Titaniumoxid und/oder Eisenoxid. Insbesondere kann ein unter der Marke Candurin der Firma Merck KGaA aus Darmstadt (DE) vertriebener Perlmuttglanzstoff verwendet werden. Ferner können auch andere Perlmuttglanzstoffe mit Zulassung als Lebensmittelzusatzstoff verwendet werden.

Für besonders gute optische Eigenschaften ist der wenigstens eine Perlmuttglanzstoff in der erfindungsgemäßen Glanzkomponente vorzugsweise in einer Menge in einem Bereich von etwa 1 Gew.-% bis etwa 40 Gew.-%, bezogen auf die Gesamtmenge der Glanzkomponente, von dieser umfasst. Besonders bevorzugt ist der Perlmuttglanzstoff in einer Menge in einem Bereich von etwa 5 Gew.-% bis etwa 15 Gew.-% von der erfindungsgemäßen Glanzkomponente umfasst.

Das Verdickungsmittel kann insbesondere ein als Lebensmittelzusatzstoff zugelassenes Verdickungsmittel sein. Beispielsweise ist das Verdickungsmittel Natriumalginat, Xanthan und/oder Gellan. Besonders bevorzugt wird ein als Lebensmittelzusatzstoff zugelassenes Verdickungsmittel verwendet, welches ein gutes Viskositätsverhalten zeigt, um eine Sedimentation des Perlmuttglanzstoffs zu verhindern. Besonders bevorzugt wird Carrageen als Verdickungsmittel verwendet. Insbesondere kann das unter der Marke Hamulsion der Firma G.C. Hahn & Co. Stabilisierungstechnik GmbH aus Lübeck (DE) vertriebene Verdickungsmittel verwendet werden. Vorzugsweise kann das Verdickungsmittel in einer Menge in einem Bereich von etwa 0,1 Gew.-% bis etwa 10 Gew.-%, besonders bevorzugt von 0,1 Gew.-% bis etwa 0,5 Gew.-%, von der erfindungsgemäßen Glanzkomponente umfasst sein.

Das Konservierungsmittel und die organische bzw. anorganische Säure der Glanzkomponente können die im Zusammenhang mit der Basiskomponente genannten Konservierungsmittel und organische bzw. anorganische Säuren sein und bevorzugt in den im Zusammenhang mit der Basiskomponente genannten Mengenbereichen von der Glanzkomponente umfasst sein.

Die Glanzkomponente umfasst bevorzugt mindestens einen Farbstoff. Dieser mindestens eine Farbstoff kann einer der im Zusammenhang mit der Basiskomponente genannten Farbstoffe sein und bevorzugt in den im Zusammenhang mit der Basiskomponente genannten Mengenbereichen von der Glanzkomponente umfasst sein. Besonders bevorzugt wird ein als Lebensmittelzusatzstoff zugelassener Farbstoff verwendet.

Vorzugsweise umfasst die Glanzkomponente Wasser in einem Mengenbereich von etwa 6 Gew.-% bis etwa 98,5 Gew.-%, weiter bevorzugt in einem Bereich von etwa 85 Gew.-% bis etwa 95 Gew.-%, wobei die Gewichtsprozentangaben bezogen auf die Gesamtmenge der Glanzkomponente sind.

Das erfindungsgemäße Eierfärbemittelsystem weist zumindest die erfindungsgemäße Basiskomponente und die Glanzkomponente auf, wobei die Basiskomponente und die Glanzkomponente separat gelagert sind, um ein Mischen der Komponenten erst kurz vor einem Färben von Eiern zu ermöglichen bzw. um eine Applikation der Komponenten nacheinander beim Färben von Eiern zu ermöglichen.

Als Farbstoff kann vorzugsweise einer der im Zusammenhang mit der Basiskomponente bzw. der Glanzkomponente genannten Farbstoffe verwendet werden, insbesondere ein Farbstoff mit Zulassung als Lebensmittelzusatzstoff. Der Farbstoff kann in den im Zusammenhang mit der Basiskomponente bzw. der Glanzkomponente genannten Mengenbereichen von diesen umfasst sein.

Gemäß einer Weiterbildung weist das System ein Behältnis mit mindestens einer ersten und einer zweiten Kammer auf, wobei die Basiskomponente und die Glanzkomponente in verschiedenen Kammern gelagert sind.

Es ist auch denkbar, dass das System mindestens zwei separate Behälter aufweist, wobei die Basiskomponente und die Glanzkomponente in verschiedenen Behältern gelagert sind.

Die vorbeschriebene Basiskomponente wird erfindungsgemäß als Eiergrundierungsmittel oder als Eierfärbemittel verwendet. Die vorbeschriebene Glanzkomponente wird als Eierfärbemittelfinish mit Glanzeffekt oder als Eierfärbemittelfinish mit
Glanzeffekt und Farbe verwendet. Weiterhin wird erfindungsgemäß eine Mischung der vorbeschriebenen Basiskomponente und der vorbeschriebenen Glanzkomponente als Eierfärbemittel mit Glanzeffekt verwendet. Die Basiskomponente wird in dem erfindungsgemäßen Eierfärbemittelsystem ohne Erwärmung eingesetzt. Aufgrund der spezifischen Zusammensetzung der Basiskomponente und insbesondere des dort eingesetzten Bindemittels, welches nicht schmilzt, sondern trocknet, können gerade die vorteilhaften gestalterischen Möglichkeiten unter Vermeidung der aus dem Stand der Technik bekannten dunklen Schlieren vermieden werden und auch Unebenheiten auf der Eierschalenoberfläche vermieden werden. Hierdurch werden letztendlich optisch und auch haptisch ansprechend gefärbte Eier möglich, und es werden auch Probleme im Zusammenhang mit dem Einsatz von mindestens einem Perlmuttglanzstoff vermieden. Denn die für diesen notwendigerweise eingesetzten Verdickungsmittel vertragen sich nicht mit der Zusammensetzung der Basiskomponente. Aufgrund des zumindest zweiteiligen erfindungsgemäßen Eierfärbemittelsystems können die entsprechenden Probleme, insbesondere Sedimentationsprobleme bei Einsatz von Perlmuttglanzstoffen, vermieden werden.

Erfindungsgemäß wird die vorbeschriebene Basiskomponente dadurch hergestellt, dass Wasser auf etwa 35°C bis etwa 90°C, vorzugsweise auf etwa 60°C bis etwa 70°C, erhitzt wird, dass ein Konservierungsmittel zugegeben wird, dass Gummi Arabicum eingerührt wird, dass zudem mittels Zugabe einer organischen oder anorganischen Säure ein pH-Wert von etwa 2,5 bis etwa 5,5, vorzugsweise von etwa 3,5 bis etwa 4,5 eingestellt wird, dass die Mischung dann auf etwa 35°C bis etwa 90°C, vorzugsweise auf etwa 60°C bis etwa 70°C, erhitzt wird und dass die Mischung von einer eventuellen Schaumkrone getrennt wird.

Weiterbildend wird bei dem Herstellungsverfahren für die Basiskomponente ein Farbstoff zugemischt. Dieser Farbstoff, das Konservierungsmittel und die organische oder anorganische Säure können die im Zusammenhang mit der Basiskomponente genannten Farbstoffe, Konservierungsmittel und organische oder anorganische Säuren umfassen und insbesondere in den im Zusammenhang mit der Basiskomponente genannten Mengenbereichen zugemischt sein. Selbiges gilt entsprechend für Wasser.

Die Glanzkomponente wird dadurch hergestellt, dass heißes Wasser von etwa 35°C bis etwa 90°C, vorzugsweise von etwa 60°C bis etwa 70°C, auf etwa 15°C bis etwa 20°C Raumtemperatur, vorzugsweise auf etwa 18°C bis etwa 20°C Raumtemperatur, abgekühlt wird, dass in dem abgekühlten Wasser ein Verdickungsmittel aufgelöst wird, dass die Mischung auf etwa 35°C bis etwa 90°C, vorzugsweise auf etwa 60°C bis etwa 70°C, erhitzt wird, dass ein Konservierungsmittel und ein Perlmuttglanzstoff zugegeben werden, dass zudem mittels Zugabe einer organischen oder anorganischen Säure ein pH-Wert von 2,5 bis etwa 5,5, vorzugsweise von etwa 3,5 bis etwa 4,5, eingestellt wird und dass die Mischung auf etwa 15°C bis etwa 20°C Raumtemperatur, vorzugsweise auf etwa 18°C bis etwa 20°C Raumtemperatur, abgekühlt wird.

Weiterbildend wird bei dem Herstellungsverfahren für die Glanzkomponente weiterhin ein Farbstoff zugemischt. Der Farbstoff, die organischen bzw. anorganischen Säure, das Konservierungsmittel, das Verdickungsmittel und der Perlmuttglanzstoff können insbesondere einer der im Zusammenhang mit der Glanzkomponente genannten Stoffe sein und insbesondere in einem der im Zusammenhang mit der Glanzkomponente genannten Mengenbereichen zugemischt werden. Selbiges gilt entsprechend für Wasser.

Soweit in den Ansprüchen und der Beschreibung der vorliegenden Erfindung der Begriff "etwa" verwendet wird, so ist hierdurch für den angesprochenen Fachmann sogleich ersichtlich, dass die genannten Bereichsgrenzen keine starren Grenzen sind, sondern vielmehr durch auch geringfügige Abweichungen hiervon noch Ziel und Zweck der vorliegenden Erfindung erfüllen. Insbesondere sind Abweichungen +/- 10 %, weiter bevorzugt von +/- 5 %, noch weiter bevorzugt von +/- 2 %, von den angegebenen Bereichsgrenzen bzw. -werten solche, welche in den Schutzbereich der vorliegenden Erfindung fallen.

Diese und weitere Vorteile der vorliegenden Erfindung werden anhand der nachfolgenden Beispiele erläutert. Es wurde eine nicht erfindungsgemäße Basiskomponente ohne Farbstoff, fünf Varianten der erfindungsgemäßen Basiskomponente mit Farbstoff, sowie eine Glanzkomponente ohne Farbstoff hergestellt.

Die Basiskomponente ohne Farbstoff wies 74,1 Gew.-% Wasser, 0,63 Gew.-% Milchsäure, 0,27 Gew.-% Kaliumsorbat und 25 Gew.-% Gummi Arabicum auf. Diese Basiskomponente wies einen pH-Wert von 3,9 auf und wurde gemäß dem im Zusammenhang mit der Basiskomponente genannten Herstellungsverfahren hergestellt. Auch die nachfolgend definierten farbigen Basiskomponenten wurden entsprechend dem im Zusammenhang mit der Basiskomponente genannten Herstellungsverfahren hergestellt.

Die erste Variante der Basiskomponente wies 0,3 Gew.-% Farbstoff E104 (Chinolingelb), 74,74 Gew.-% Wasser, 0,61 Gew.-% Milchsäure, 0,26 Gew.-% Kaliumsorbat und 24,09 Gew.-% Gummi Arabicum auf. Diese Variante der Basiskomponente hatte eine gelbe Farbe und einen pH-Wert von etwa 3,9.

Die zweite Variante der Basiskomponente wies 0,21 Gew.-% Farbstoff E110 (Gelborange S), 74,83 Gew.-% Wasser, 0,61 Gew.-% Milchsäure, 0,26 Gew.-% Kaliumsorbat und 24,09 Gew.-% Gummi Arabicum auf. Diese Variante hatte eine orange Farbe und einen pH-Wert von etwa 3,9.

Die dritte Variante der Basiskomponente wies 0,21 Gew.-% Farbstoff E122 (Azorubin), 74,83 Gew.-% Wasser, 0,61 Gew.-% Milchsäure, 0,26 Gew.-% Kaliumsorbat und 24,09 Gew.-% Gummi Arabicum auf. Diese Variante hatte eine rote Farbe und einen pH-Wert von etwa 3,9.

Die vierte Variante der Basiskomponente wies 0,17 Gew.-% Farbstoff E142 (Brillantsäuregrün BS), 74,68 Gew.-% Wasser, 0,61 Gew.-% Milchsäure, 0,26 Gew.-% Kaliumsorbat und 24,09 Gew.-% Gummi Arabicum auf. Diese Variante hatte eine grüne Farbe und einen pH-Wert von etwa 3,9.

Die fünfte Variante der Basiskomponente wies 0,11 Gew.-% Farbstoff E131 (Patentblau V), 74,93 Gew.-% Wasser, 0,61 Gew.-% Milchsäure, 0,26 Gew.-% Kaliumsorbat und 24,09 Gew.-% Gummi Arabicum auf. Diese Variante hatte eine blaue Farbe und einen pH-Wert von etwa 3,9.

Die Glanzkomponente wies 89,96 Gew.-% Wasser, 0,2 Gew.-% Hamulsion der Firma G.C. Hahn & Co. Stabilisierungstechnik GmbH aus Lübeck (DE), 0,57 Gew.-% Milchsäure, 0,27 Gew.-% Kaliumsorbat und 9 Gew.- % Candurin der Firma Merck KGaA aus Darmstadt (DE) auf. Diese Glanzkomponente hatte seidigen, irisierenden Glanz sowie einen pH-Wert von 3,9 und wurde gemäß dem im Zusammenhang mit der Glanzkomponente genannten Herstellungsverfahren hergestellt.

Die farbigen Varianten der Basiskomponente und die Glanzkomponente wurden zum Eierfärben verwendet. Die jeweils unifarben gefärbten Eier wiesen eine glatte, gleichmäßig farbige Oberfläche mit Perlmuttglanzeffekt auf.

## Patentansprüche

1. Basiskomponente für ein wässriges Eierfärbemittel umfassend Wasser, mindestens eine anorganische oder organische Säure, mindestens ein Konservierungsmittel, sowie mindestens ein Bindemittel, wobei das Bindemittel Gummi Arabicum ist, und wobei Gummi Arabicum in einer Menge in einem Bereich von 21 Gew.-% bis 45 Gew.-%, bezogen auf die Gesamtmenge der Basiskomponente, von dieser umfasst ist, wobei diese weiterhin mindestens einen Farbstoff umfasst.

2. Basiskomponente gemäß Anspruch 1, **dadurch gekennzeichnet, dass** der mindestens eine Farbstoff in einer Menge in einem Bereich von 0,1 Gew.-% bis 40 Gew.-%, bezogen auf die Gesamtmenge der Basiskomponente, von dieser umfasst ist.

3. Basiskomponente gemäß einem der vorhergehenden Ansprüche, **dadurch gekennzeichnet, dass** die mindestens eine organische Säure Milchsäure ist.

4. Basiskomponente gemäß einem der vorhergehenden Ansprüche, **dadurch gekennzeichnet, dass** die Säure in einer Menge in einem Bereich von 0,3 Gew.-% bis 3 Gew.-%, bezogen auf die Gesamtmenge der Basiskomponente, von dieser umfasst ist.

5. Basiskomponente gemäß einem der vorhergehenden Ansprüche, **dadurch gekennzeichnet, dass** das mindestens eine Konservierungsmittel Kaliumsorbat ist.

6. Basiskomponente gemäß einem der vorhergehenden Ansprüche, **dadurch gekennzeichnet, dass** das mindestens eine Konservierungsmittel in einer Menge in einem Bereich von 0,1 Gew.-% bis 1 Gew.-%, bezogen auf die Gesamtmenge der Basiskomponente, von dieser umfasst ist.

7. Eierfärbemittelsystem aufweisend zumindest die Basiskomponente gemäß einem der vorherigen Ansprüche 1 bis 6 und eine Glanzkomponente, umfassend Wasser, mindestens ein Verdickungsmittel, mindestens eine anorganische oder organische Säure, mindestens ein Konservierungsmittel sowie mindestens einen Perlmuttglanzstoff, wobei die Basiskomponente und die Glanzkomponente separat gelagert sind, um ein Mischen der Komponenten erst kurz vor einem Färben von Eiern zu ermöglichen bzw. um eine Applikation der Komponenten nacheinander beim Färben von Eiern zu ermöglichen.

8. System gemäß Anspruch 7, wobei das System ein Behältnis mit mindestens einer ersten und einer zweiten Kammer aufweist, wobei die Basiskomponente und die Glanzkomponente in verschiedenen Kammern gelagert sind.

9. Verwendung der Basiskomponente gemäß einem der Ansprüche 1 bis 6 als Eierfärbemittelgrundierung oder als Eierfärbemittel.

10. Verwendung einer Mischung der Basiskomponente gemäß einem der Ansprüche 1 bis 6 und einer Glanzkomponente, umfassend Wasser, mindestens ein Verdickungsmittel, mindestens eine anorganische oder organische Säure, mindestens ein Konservierungsmittel sowie mindestens einen Perlmuttglanzstoff als Eierfärbemittel mit Glanzeffekt.

11. Herstellungsverfahren für die Basiskomponente gemäß einem der vorherigen Ansprüche 1 bis 6, **dadurch gekennzeichnet, dass** Wasser auf 35°C bis 90°C, erhitzt wird,
dass ein Konservierungsmittel zugegeben wird,
dass Gummi Arabicum eingerührt wird,
dass zudem mittels Zugabe einer organischen oder anorganischen Säure ein pH-Wert von 2,5 bis 5,5 eingestellt wird,
dass die Mischung dann auf 35°C bis 90°C erhitzt wird,
und dass eine eventuelle Schaumkrone von der Mischung entfernt wird, wobei weiterhin ein Farbstoff zugemischt wird.

## Claims

1. Base component for an aqueous egg dyeing composition comprising water, at least one inorganic or organic acid, at least one preservative, as well as at least one binder, wherein the binder is gum arabic, and wherein gum arabic is comprised in the composition in a quantity ranging from 21 % by weight to 45% by weight, based on the total composition of the base component, wherein said composition further comprises at least one dye.

2. Base component according to claim 1, **characterized in that** the at least one dye is comprised by the base component in a quantity ranging from 0.1 % by weight to 40% by weight, based on the total quantity of the base component.

3. Base component according to one of the preceding claims, **characterized in that** the at least one organic acid is lactic acid.

4. Base component according to one of the preceding claims, **characterized in that** the acid is comprised by the base component in a quantity ranging from 0.3% by weight to 3% by weight, based on the total quantity of the base component.

5. Base component according to one of the preceding claims, **characterized in that** the at least one preservative is potassium sorbate.

6. Base component according to one of the preceding claims, **characterized in that** the at least one preservative is comprised by the base component in a quantity ranging from 0.1 % by weight to 1 % by weight, based on the total quantity of the base component.

7. Egg dyeing agent system comprising at least said base component according to one of the preceding claims 1 to 6 and a gloss component, comprising water, at least one thickener, at least one inorganic or organic acid, at least one preservative as well as at least one pearlescent substance, wherein the base component and the gloss component are stored separately, in order to allow a mixing of the components only short before a dyeing of eggs, or in order to allow an application of the components one after the other during the dyeing of eggs.

8. System according to claim 7, wherein the system comprises a container with at least one first and one second chamber, wherein the base component and the gloss component are stored in different chambers.

9. Use of the base component according to one of the claims 1 to 6 as a primer for an egg dyeing agent or as egg dyeing agent.

10. Use of a mixture of the base component according to one of the claims 1 to 6 and of a gloss component, comprising water, at least one thickener, at least one inorganic or organic acid, at least one preservative as well as at least one pearlescent substance as egg dyeing agent with gloss effect.

11. Manufacturing method for the base component according to one of the preceding claims 1 to 6, **characterized in that**
water is heated up to a temperature of 35°C to 90°C,
that a preservative is added,
that gum Arabic is mixed **in,**
**that** furthermore, a pH-value of 2.5 to 5.5 is adjusted by adding an organic or inorganic acid,
that the mixture is then heated to a temperature of 35°C to 90°C,
and that a possible whitecap is removed from the mixture, wherein further a dye is added.

## Revendications

1. Composant de base pour un colorant à base aqueuse pour oeufs contenant de l'eau, au moins un acide inorganique ou organique, au moins un conservateur et au moins un liant, le liant étant de la gomme arabique et la gomme arabique étant contenue dans une quantité de l'ordre de 21% à 45% en poids par rapport à la quantité totale de composant de base, celui-ci contenant en outre au moins un colorant.

2. Composant de base selon la revendication 1 **caractérisé en ce que** l'au moins un colorant est contenu dans une quantité de l'ordre de 0,1% à 40% en poids par rapport à la quantité totale de composant de base.

3. Composant de base selon l'une des revendications précédentes **caractérisé en ce que** l'au moins un acide organique est de l'acide lactique.

4. Composant de base selon l'une des revendications précédentes **caractérisé en ce que** l'acide est contenu dans une quantité de l'ordre de 0,3% à 3% en poids par rapport à la quantité totale de composant de base.

5. Composant de base selon l'une des revendications précédentes **caractérisé en ce que** l'au moins un conservateur est du sorbate de potassium.

6. Composant de base selon l'une des revendications précédentes **caractérisé en ce que** l'au moins un conservateur est contenu dans une quantité de l'ordre de 0,1 % à 1 % en poids par rapport à la quantité totale de composant de base.

7. Système de colorant pour oeufs comprenant au moins le composant de base selon une des revendications précédentes 1 à 6 et un composant de brillance contenant de l'eau, au moins un épaississant, au moins un acide inorganique ou organique, au moins un conservateur et au moins un agent de brillance nacré, le composant de base et le composant de brillance étant stockés séparément pour permettre un mélange des composants peu avant la coloration des oeufs ou pour permettre une application successive des composants lors de la coloration des oeufs.

8. Système selon la revendication 7 possédant un récipient avec au moins une première et une deuxième chambre, dans lequel le composant de base et le composant de brillance sont stockés dans des chambres différentes.

9. Utilisation du composant de base selon les revendications 1 à 6 comme couche de fond de colorant pour oeufs ou comme colorant pour oeufs.

10. Utilisation d'un mélange du composant de base selon une des revendications 1 à 6 et d'un composant de brillance contenant de l'eau, au moins un épaississant, au moins un acide inorganique ou organique, au moins un conservateur et au moins un agent de brillance nacré comme colorant pour oeufs à effet brillant.

11. Procédé de fabrication du composant de base selon l'une des revendications précédentes 1 à 6 **caractérisé en ce que** l'eau est chauffée à une température de 35°C à 90°C, qu'un conservateur est ajouté,que de la gomme arabique est mélangée qu'une valeur pH de 2,5 à 5,5 est obtenue en ajoutant un acide organique ou inorganique, que le mélange est ensuite chauffé à une température de 35°C à 90°C et que l'écume éventuelle est éliminée, un colorant étant en outre ajouté.
